# EUROPEAN PATENT SPECIFICATION

(11) **EP 2 266 837 B1**
(45) Date of publication and mention of the grant of the patent: **23.01.2013**
(21) Application number: 10166812.7
(22) Date of filing: 22.06.2010
(51) Int. Cl.: B60Q 1/14, G06K 9/00, B60Q 1/05, H05B 37/02

(54) **Light distribution control system for automotive headlamp**
System zur Steuerung der Lichtverteilung von Fahrzeugscheinwerfer
Système de contrôle de la distribution lumineuse d'un phare de voiture

(30) Priority: 22.06.2009 JP 2009148045
(43) Date of publication of application: 29.12.2010
(73) Proprietor: Koito Manufacturing Co., Ltd., Tokyo 108-8711 (JP)
(72) Inventor: Tatara, Naoki, Shizuoka-shi Shizuoka Shizuoka 424-8764 (JP); Fukazawa, Fusao, Shizuoka-shi Shizuoka Shizuoka 424-8764 (JP); Mochizuki, Kiyotaka, Shizuoka-shi Shizuoka Shizuoka 424-8764 (JP)
(74) Representative: Neobard, William John

(56) References cited:
- EP-A1- 2 062 775
- DE-A1- 10 242 864
- US-A1- 2004 052 083
- US-A1- 2005 242 740

## Description

The present invention relates to a light distribution control system for an automotive headlamp.

Conventionally, the automotive headlamps have been presented in which presence or absence of a preceding vehicle or an oncoming vehicle (hereinafter, appropriately referred to as a "leading vehicle") is detected based on an image of the front of a vehicle, which has been imaged with a camera, and then a light distribution pattern is changed based on a detection result (see, for example, Patent Documents 1 and 2 and US 2005/0242740 A1).
[Patent Document 1] Japanese Patent Application Publications No. 2008-94127
[Patent Document 2] Japanese Patent Application Publications No. 2008-37240

In the aforementioned automotive headlamp, the detection accuracy of a leading vehicle is important, the detection being performed based on the image data from a camera. If the detection accuracy is low, there is the fear that glare may be provided to a leading vehicle due to a failure in detecting the leading vehicle. In order to enhance the detection accuracy of a leading vehicle, it can be considered that an ultra-sensitive camera by which a clear image can be obtained even at night is used; however, use of such an ultra-sensitive camera makes the cost very high.

The present invention has been made in view of these situations and provides a light distribution control system for an automotive headlamp in which glare is hardly provided to a leading vehicle with an inexpensive structure.

In order to solve the aforementioned challenge, a light distribution control system for an automotive headlamp according to claim 1 is proposed.

Some optional features of the invention are recited in the dependent claims.

Embodiments will now be described by way of example only, with reference to the accompanying drawings ,in which:
Fig. 1 is a schematic cross-sectional view illustrating the internal structure of an automotive headlamp;
Fig. 2 is a schematic perspective view of a rotatable shade;
Figs. 3A to 3F are views illustrating light distribution patterns that can be emitted by the automotive headlamp;
Fig. 4 is a functional block diagram for explaining the light distribution control system of an embodiment;
Fig. 5 is a flow chart for explaining switching control of a light distribution pattern in the light distribution control system of the present embodiment;
Figs. 6A to 6E are timing charts for explaining the control when switching to a light distribution pattern with a wider emission range;
Figs. 7A to 7E are timing charts for explaining the control when switching to a light distribution pattern with a narrower emission range;
Fig. 8 is a view illustrating detection time between each light distribution pattern when an emission range is widened;
Fig. 9 is a view illustrating the detection time between each light distribution pattern when an emission range is narrowed;
Fig. 10 is a view for explaining variable control of the detection time in accordance with the horizontal position of a leading vehicle; and
Figs. 11A to 11F are views for explaining control of a light distribution pattern for enhancing visibility on a curved road.

A light distribution control system for an automotive headlamp of an embodiment can detect a leading vehicle, which is present in front of the own vehicle, and selects the optimal light distribution pattern from a plurality of light distribution patterns based on a result of the detection, so that the optimal light distribution pattern is emitted. In this light distribution control system, the time for detecting a leading vehicle is set to be longer when switching to a light distribution pattern with a wider emission range than before, than that set when switching to a light distribution pattern with a narrower emission range. For example, when switching from a light distribution pattern for low beam to that for high beam, the time for detecting a leading vehicle is set to be larger than vice versa. Thereby, the detection accuracy of a leading vehicle can be enhanced when switching to a light distribution pattern with a wider emission range and it can be prevented that glare may be provided to the leading vehicle.

Hereinafter, an embodiment of the present invention will be described in detail with reference to the accompanying drawings.

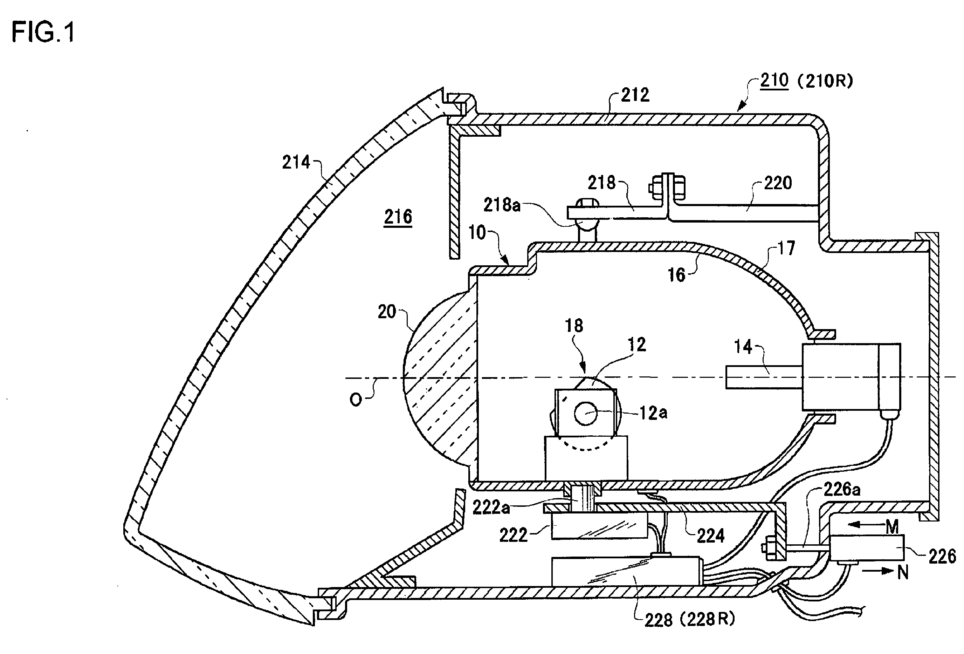

Fig. 1 is a schematic cross-sectional view illustrating the internal structure of an automotive headlamp 210 used in a light distribution control system according to an embodiment of the present invention. The automotive headlamp 210 illustrated in Fig. 1 is a light distribution variable headlamp and is installed singly on each side in the vehicle width direction. The structures of the automotive headlamps 210 installed on both sides are substantially the same as each other, and hence the structure of the automotive headlamp 210R, which is installed on the right side, will be described as the representative of both the headlamps.

The automotive headlamp 210R has a lamp chamber 216, which is formed of both a lamp body 212 with an opening in the vehicle front direction and a transparent cover 214 that covers the opening of the lamp body 212. In the lamp chamber 216, a lamp unit 10, which emits light in the vehicle front direction, is housed. A lamp bracket 218 having a pivot mechanism 218a, which is to be the center of the swing of the lamp unit 10, is formed in part of the lamp unit 10. The lamp bracket 218 is connected with a body bracket 220, which is installed upright on the inner wall of the lamp body 212, by fastening members, such as screws. Accordingly, the lamp unit 10 is fixed to a certain position in the lamp chamber 216, and also the posture of the lamp unit 10 can be changed to, for example, forward leaning posture or backward leaning posture, centered on the pivot mechanism 218a.

The rotation axis 222a of an swivel actuator 222 for structuring an Adaptive Front-lighting System (AFS) for curved roads, which illuminates the traveling direction when driving on a curved road, etc., is fixed to the underside of the lamp unit 10. The swivel actuator 222 swivels the lamp unit 10 in the traveling direction, centered on the pivot mechanism 218a, based on the data on the steering amount, which is provided from the vehicle side, on the shape data of the driving road, which is provided from a navigation system, and on the relationship of the relative position between a leading vehicle and the own vehicle, etc. As a result, the emission range of the lamp unit 10 is directed to the front of a curve of a curved road, not to the front of the own vehicle, thereby enhancing the forward visibility of a driver. The swivel actuator 222 can be structured with, for example, a stepping motor. Alternatively, when the swivel angle is fixed, a solenoid, etc., can be used.

The swivel actuator 222 is fixed to a unit bracket 224. A leveling actuator 226, which is arranged outside the lamp body 212, is connected with the unit bracket 224. The leveling actuator 226 is structured with, for example, a motor that elongates and contracts a rod 226a in the direction of the arrows M and N. When the rod 226a has been elongated in the direction of the arrow M, the lamp unit 10 swings so as to take backward leaning posture, centered on the pivot mechanism 218a. In contrast, when the rod 226a has been contracted in the direction of the arrow N, the lamp unit 10 swings so as to take forward leaning posture, centered on the pivot mechanism 218a. When the lamp unit 10 takes backward leaning posture, the leveling adjustment for turning the light axis of the lamp unit 10 upwards can be performed. In contrast, when the lamp unit 10 takes forward leaning posture, the leveling adjustment for turning the light axis thereof downwards can be performed. The light axis thereof can be adjusted in accordance with vehicle posture by performing the leveling adjustment as stated above. As a result, the reaching distance of the forward emission by the automotive headlamp 210 can be adjusted to the optimal distance.

This leveling adjustment can also be performed in accordance with the vehicle posture while driving. For example, a vehicle takes backward leaning posture when accelerated while driving, in contrast, a vehicle takes forward leaning posture when decelerated while driving. Accordingly, the emitting direction of the automotive headlamp 210 also fluctuates up and down, corresponding to a posture state of a vehicle, thereby causing the forward emission distance to be larger or smaller. Accordingly, the reaching distance of the forward emission can be adjusted, even while driving, to the optimal one by performing the leveling adjustment of the lamp unit 10 in real time based on vehicle posture. This is sometimes referred to as "auto leveling".

An emission controller 228, which performs control of turning on/off the lamp unit 10 and control of forming a light distribution pattern, is arranged on the inner wall of the lamp chamber 216, for example, at a lower position of the lamp unit 10. In Fig. 1, an emission controller 228R for controlling the automotive headlamp 210R is arranged. The emission controller 228R also performs control of the swivel actuator 222 and the leveling actuator 226, etc.

The lamp unit 10 can be provided with an aiming adjustment mechanism. For example, an aiming pivot mechanism, which is to be the center of the swing when the aiming adjustment is performed, is arranged, for example, in the connection portion between the rod 226a of the leveling actuator 226 and the unit bracket 224. A pair of aiming adjustment screws, which move forward/backward in the vehicle longitudinal direction, are arranged in the connection portion between the body bracket 220 and the lamp bracket 218 so as to create a gap between the aiming adjustment screws in the vehicle width direction. For example, when the two aiming adjustment screws are moved forward, the lamp unit 10 takes forward leaning posture, centered on the aiming pivot mechanism, thereby the light axis being adjusted downward. Likewise, when the two aiming adjustment screws are moved backward, the lamp unit 10 takes backward leaning posture, centered on the aiming pivot mechanism, thereby the light axis being adjusted upward. Further, when the aiming adjustment screw on the left side in the vehicle width direction is moved forward, the lamp unit 10 takes clockwise swivel posture, centered on the aiming pivot mechanism, thereby the light axis being adjusted rightward. Further, when the aiming adjustment screw on the right side in the vehicle width direction is moved forward, the lamp unit 10 takes counter-clockwise swivel posture, centered on the aiming pivot mechanism, thereby the light axis being adjusted leftward. This aiming adjustment is performed when a vehicle is shipped or inspected, or when the automotive headlamp 210 is replaced with another. At the time, the automotive headlamp 210 is adjusted so as to have the prescribed posture specified in terms of design and the control of forming a light distribution pattern according to the present embodiment is performed on the basis of this posture.

The lamp unit 10 has a shade mechanism 18 including a rotatable shade 12, a bulb 14 as a light source, a lamp housing 17 supporting a reflector 16 on the inner wall, and a projection lens 20. As the bulb 14, for example, an incandescent bulb, a halogen bulb, an electric discharge bulb, or an LED can be used. In the present embodiment, an example is described in which the bulb 14 is structured with a halogen bulb. The reflector 16 reflects the light emitted from the bulb 14. Part of both the light emitted from the bulb 14 and the light reflected by the reflector 16 are guided to the projection lens 20 through the rotatable shade 12 of which the shade mechanism 18 is composed.

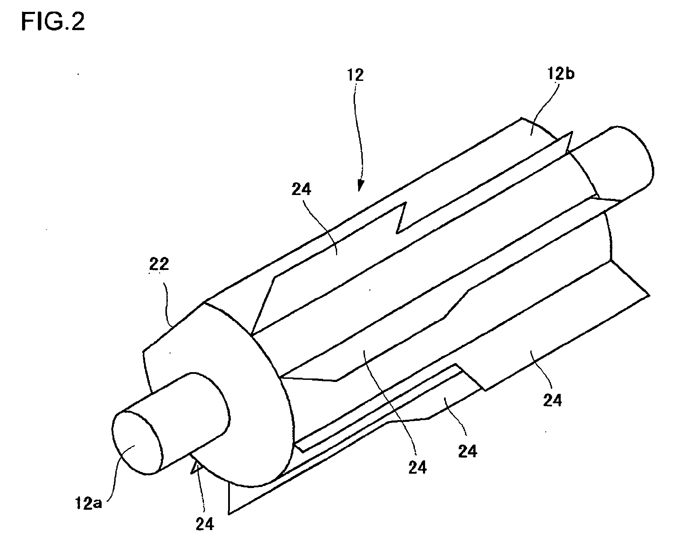

Fig. 2 is a schematic perspective view of the rotatable shade 12. The rotatable shade 12 is a cylindrically-shaped member that is rotatable around the rotation axis 12a. The rotatable shade 12 has a notch 22 in which part of the rotatable shade 12 is cut off in the axial direction, and holds a plurality of plate-shaped shade plates 24 on the outer circumferential surface 12b other than the notch 22. The rotatable shade 12 can transfer the notch 22 or any one of the plurality of shade plates 24 into a position on the back focal plane including the back focus of the projection lens 20 in accordance with its rotation angle. The light distribution pattern following the shape of the ridge of the shade plate 24, which is located on the light axis O in accordance with the rotation angle of the rotatable shade 12, is formed. For example, by transferring any one of the plurality of shade plates 24 onto the light axis O so as to shade part of the light emitted from bulb 14, a light distribution pattern for low beam or a light distribution pattern, in part of which a characteristic of a light distribution pattern for low beam is included, is formed. Further, by transferring the notch 22 onto the light axis O so as not to shade the light emitted from the bulb 14, a light distribution pattern for high beam is formed.

The rotatable shade 12 can be rotated with a shade motor (not illustrated) and can transfer the shade plate 24 for forming a rotationally desired light distribution pattern or the notch 22 onto the light axis O by controlling a rotation amount of the shade motor. Alternatively, the rotatable shade 12 may be designed to have only a shading function with the notch 22 of the outer circumferential surface 12b of the rotatable shade 12 being omitted. When a light distribution pattern for high beam is formed, the rotatable shade 12 is designed to retract from the position on the light axis O by driving, for example, a solenoid, etc. With such a structure, a light distribution pattern is fixed to that for low beam or that similar thereto even if the shade motor for rotating the rotatable shade 12 fails. That is, it is surely avoided that the rotatable shade 12 is fixed to the posture in which a light distribution pattern for high beam is formed, thereby attaining a fail-safe function.

The projection lens 20 is arranged on the light axis O that extends in the vehicle longitudinal direction and the bulb 14 is arranged on the back side of the back focal surface of the projection lens 20. The projection lens 20 is composed of a plano-convex aspheric lens, the front surface of which is convex-shaped and the back surface of which is flat-shaped, and the projection lens 20 projects, as an inverted image, the image of the light source that is formed on the back focal surface onto the virtual vertical screen in front of the automotive headlamp 210.

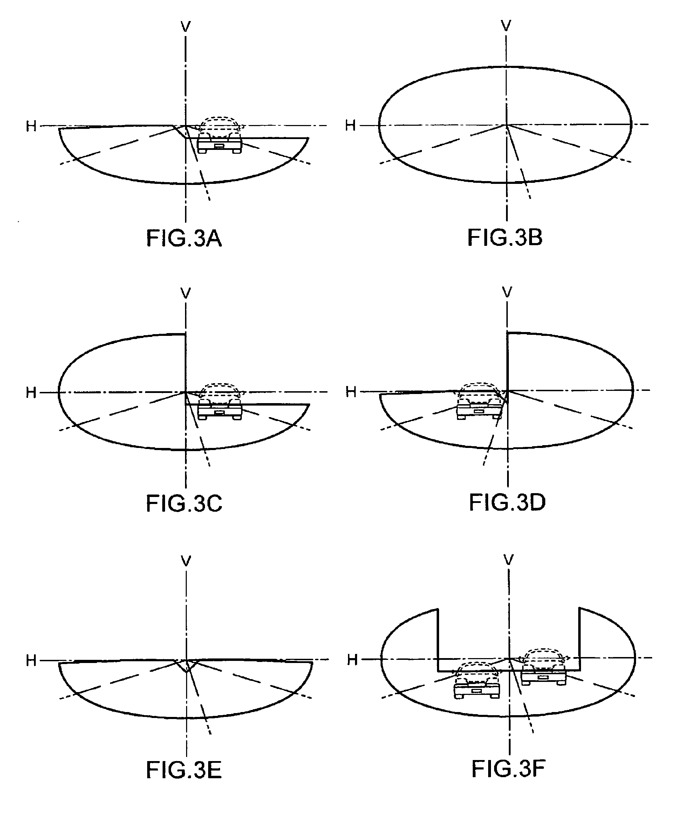

Figs. 3A to 3F are views illustrating the light distribution patterns that can be emitted by the automotive headlamp 210 according to the present embodiment. Figs. 3A to 3F illustrate the light distribution patterns that are formed on the virtual vertical screen, which is arranged at a position 25 m distant from the front of the automotive headlamp 210. In the embodiment, six light distribution patterns illustrated in Figs. 3A to 3F can be formed. Each of the light distribution patterns illustrated in Figs. 3A to 3F is a synthesized light distribution pattern that is formed by superimposing one of the light distribution patterns, which are respectively formed by the automotive headlamps 210 arranged on both sides in the vehicle width direction, on the other.

Fig. 3A illustrates a light distribution pattern for low beam. The light distribution pattern for low beam is a light distribution pattern, taking into consideration not to provide glare to an oncoming vehicle or a pedestrian in urban area driving in an area of left-hand traffic prescribed by traffic regulations.

Fig. 3B illustrates a light distribution pattern for high beam. The light distribution pattern for high beam is a light distribution pattern in which forward visibility of a driver can be secured to the maximum.

Fig. 3C illustrates a light distribution pattern for left-sided high beam, which is used in an area of left-hand traffic prescribed by traffic regulations. The light distribution pattern for left-sided high beam is formed by being synthesized from a light distribution pattern for left-sided high beam, which is formed by the automotive headlamp 210 on the left side, and a light distribution pattern for low beam, which is formed by the automotive headlamp 210 on the right side. Such a light distribution pattern for left-sided high beam is suitable when nor a leading vehicle nor a pedestrian is present on the own lane side but an oncoming vehicle or a pedestrian is present on the opposite lane side. The light distribution pattern is a light distribution pattern, taking into consideration not to provide glare to an oncoming vehicle or a pedestrian on the opposite lane while enhancing forward visibility of a driver.

Fig. 3D illustrates a light distribution pattern for right-sided high beam, which is used in an area of left-hand traffic prescribed by traffic regulations. The light distribution pattern for right-sided high beam is formed by being synthesized from a light distribution pattern for right-sided high beam, which is formed by the automotive headlamp 210 on the right side, and a light distribution pattern for low beam, which is formed by the automotive headlamp 210 on the left side. Such a light distribution pattern for right-sided high beam is suitable when a leading vehicle or a pedestrian is present on the own lane side, but neither an oncoming vehicle nor a pedestrian is present on the opposite lane side. The light distribution pattern is a light distribution pattern, taking into consideration not to provide glare to a leading vehicle or a pedestrian on the own lane while enhancing forward visibility of a driver.

Fig. 3E is a variation of a light distribution pattern for low beam, in which emission of light toward the periphery of the cross point between the vertical line V and the horizontal line H on the virtual vertical screen is suppressed. The light distribution pattern illustrated in Fig. 3E is one referred to as a "V light distribution pattern". This V light distribution pattern forms, for example, a light distribution pattern for low beam, which is illustrated in Fig. 3A, by the automotive headlamp 210 on the left side. On the other hand, the V light distribution pattern forms, by the automotive headlamp 210 on the right side, a light distribution pattern for low beam, which is used in an area of right-hand traffic prescribed by traffic regulations, namely, a light distribution pattern that has line symmetry of a light distribution pattern illustrated in Fig. 3A with respect to the vertical line V. By superimposing these two different light distribution patterns one on another, a V light distribution pattern can be formed, in which emission of light toward the periphery of the remote cross point between the vertical line V and the horizontal line H where a preceding vehicle or an oncoming vehicle may be possibly present is suppressed. The V light distribution pattern can be said to be a light distribution pattern that facilitates a driver to recognize an obstacle, etc., located in road shoulder on the own lane side or the opposite lane side while suppressing glare to a remote leading vehicle.

Fig. 3F is a variation of a light distribution pattern for left-sided high beam, which is illustrated in Fig. 3C, and of a light distribution pattern for right-sided high beam, which is illustrated in Fig. 3D, and is one referred to as a "split light distribution pattern". This split light distribution pattern is a light distribution pattern in which the visibility to the outside of the own lane and the opposite lane can be sufficiently secured while suppressing emission of light into the own lane and the opposite lane. Such a split light distribution pattern is formed, for example, as follows. A light distribution pattern for left-sided high beam, which is illustrated in Fig. 3C, is formed in a state where the automotive headlamp 210 on the left side is swiveled leftward at a predetermined angle. On the other hand, a light distribution pattern for right-sided high beam, which is illustrated in Fig. 3D, is formed in a state where the automotive headlamp 210 on the right side is swiveled rightward at a predetermined angle. A split light distribution pattern as illustrated in Fig. 3F can be formed by superimposing the light distribution pattern for left-sided high beam onto the light distribution pattern for right-sided high beam.

As stated above, according to the automotive headlamp 210 of the present embodiment, six types of light distribution patterns consisting of a light distribution pattern for low beam, a light distribution pattern for high beam, a light distribution pattern for left-sided high beam, a light distribution pattern for right-sided high beam, a V light distribution pattern, and a split light distribution pattern, can be formed.

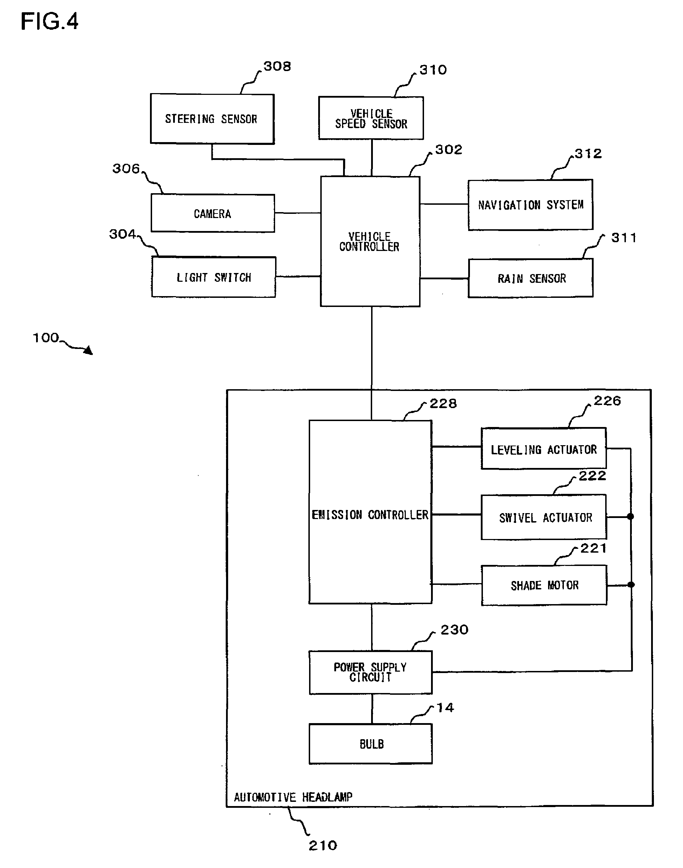

Fig. 4 is a functional block diagram for explaining a light distribution control system 100 according to an embodiment of the present invention. The light distribution control system 100 comprises the aforementioned automotive headlamp 210, a vehicle controller 302 configured to control the automotive headlamp 210, a light switch 304, a camera 306, a steering sensor 308, a vehicle speed sensor 310, and a navigation system 312.

The emission controller 228 of the automotive headlamp 210 controls a power supply circuit 230 in accordance with a command by the vehicle controller 302, which is installed in a vehicle, so that control of turning on the bulb 14 is performed. The emission controller 228 controls the leveling actuator 226, the swivel actuator 222, and the shade motor 221 in accordance with a command from the vehicle controller 302.

For example, the emission controller 228 controls the swivel actuator 222 while swiveling, such as driving on a curved road and driving left or right, so that the light axis of the lamp unit 10 is directed to the direction in which the vehicle will travel. The emission controller 228 controls the leveling actuator 226 in accordance with backward leaning or forward leaning of a vehicle posture when the vehicle is accelerated or decelerated, so that the reaching distance of the forward emission is adjusted to the optimal distance by adjusting the light axis of the lamp unit 10 in the vehicle vertical direction. Further, the emission controller 228 controls the leveling actuator 226, the swivel actuator 222, and the shade motor 221 in accordance with a command regarding a light distribution pattern from the vehicle controller 302.

In the light distribution control system 100, a light distribution pattern can be manually switched to another in accordance with an operation of the light switch 304 by a driver. Hereinafter, a mode in which a light distribution pattern is manually controlled as stated above is appropriately referred to as a "manual mode". For example, when a driver selects a light distribution pattern for low beam, the vehicle controller 302 issues a command to the emission controller 228 so as to form a light distribution pattern for low beam. When receiving the command, the emission controller 228 controls the leveling actuator 226, the swivel actuator 222, and shade motor 221 such that a light distribution pattern for low beam is formed.

Further, in the light distribution control system 100, a light distribution pattern, which is optimal for the situations around a vehicle, can be formed by detecting the situations therearound with various sensors, not by an operation of the light switch 304. Hereinafter, a mode in which a light distribution pattern is controlled as stated above is appropriately referred to as an "ADB (Adaptive Driving Beam) mode".

For example, when a leading vehicle has been detected in front of the own vehicle, the vehicle controller 302 determines that glare to the leading vehicle should be prevented and issues a command to the emission controller 228 such that, for example, a light distribution pattern for low beam is formed. In contrast, when no leading vehicle has been detected, the vehicle controller 302 determines that the visibility of the driver should be enhanced and issues a command to the emission controller 228 such that, for example, a light distribution pattern for high beam is formed.

In order to detect a leading vehicle as stated above, a camera 306, such as a stereo camera, is connected with the vehicle controller 302 as a means for recognizing a target. The image data imaged with the camera 306 is transmitted to the vehicle controller 302 and then the vehicle controller 302 performs image analysis through signal processing of the image data such that a leading vehicle within the imaging range is detected. Subsequently, the vehicle controller 302 selects the optimal light distribution pattern based on the acquired information on the leading vehicle and issues a command to the emission controller 228 so as to form the selected light distribution pattern. The means for detecting a leading vehicle can be appropriately modified and another detection means, such as a millimeter-wave radar and an infrared radar, may be used instead of the camera 306. Alternatively, a combination of them may be used.

In addition, the vehicle controller 302 can also acquire information from the steering sensor 308 and the vehicle speed sensor 310, etc., which are usually installed in a vehicle, and hence can select a light distribution pattern to be formed in accordance with a driving state or driving posture of a vehicle, or can change a light distribution pattern in a simplified manner by changing the direction of the light axis. For example, when determining that a vehicle is swiveling based on the information from the steering sensor 308, the vehicle controller 302 performs rotation control on the rotatable shade 12 such that a light distribution pattern for enhancing the visibility in the swivel direction is formed. Alternatively, the visibility may be enhanced by directing the light axis of the lamp unit 10 to the swivel direction with the swivel actuator 222 being controlled, without changing the rotation state of the shade 12.

Other than that, the vehicle controller 302 can also acquire information on the shape or form of a road, and that on the installation of a road sign, etc., from the navigation system 312. By acquiring these information beforehand, a light distribution pattern, which is suitable for a driving road, can also be smoothly formed with the leveling actuator 226, the swivel actuator 222, and the shade motor 221, etc., being controlled.

In the ADB mode, the detection accuracy of a leading vehicle is important, the detection being performed based on the image data from the camera 306. If the detection accuracy is low, there is the fear that glare may be provided to a leading vehicle due to a failure in detecting the leading vehicle, or that a driver may feel a sense of discomfort because light distribution patterns are frequently switched due to repeated false detection. In order to enhance the detection accuracy of a leading vehicle, it can be considered that an ultra-sensitive camera by which a clear image can be obtained even at night is used; however, use of such an ultra-sensitive camera makes the cost high. Therefore, in the present embodiment, a technique will be proposed in which glare to a leading vehicle can be prevented even when an inexpensive camera, the sensitivity of which is not so high, is used.

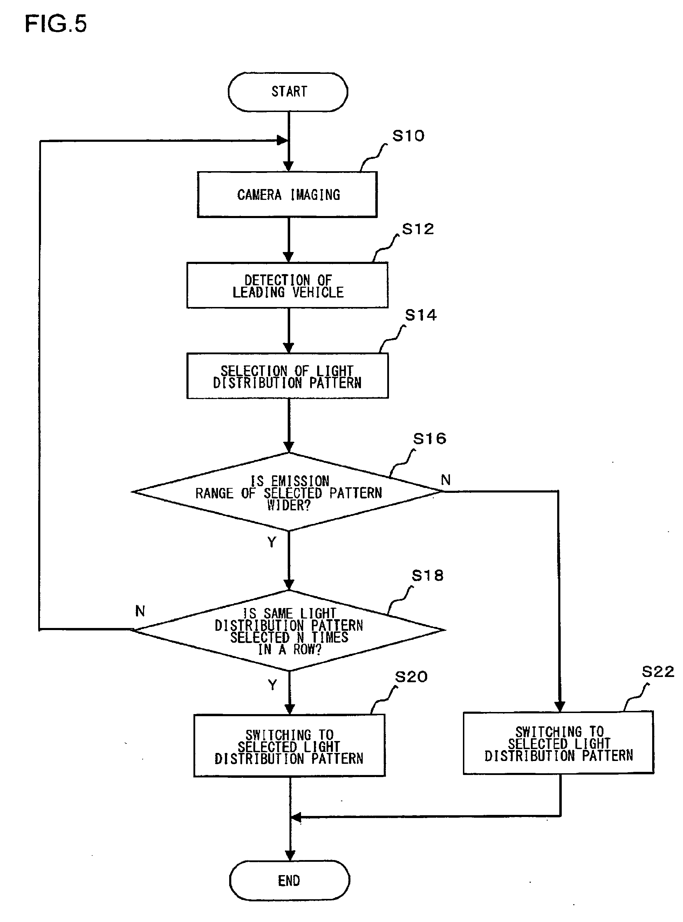

Fig. 5 is a flow chart for explaining switching control of light distribution patterns in the light distribution control system 100 according to the present embodiment. The control described hereinafter is switching control of light distribution patterns in the ADB mode. The switching control of light distribution patterns in accordance with the flow chart illustrated in Fig. 5 is repeatedly performed at every predetermined time.

The front of a vehicle is at first imaged with the camera 306 (S10). The camera 306 is configured to image at a predetermined imaging cycle Tp (second). The imaged data is transmitted to the vehicle controller 302. The vehicle controller 302 performs image analysis on the image data, which have been provided from the camera 306, so that a leading vehicle within the imaging range is detected (S12). Thereafter, the vehicle controller 302 selects the optimal light distribution pattern from the six types of the light distribution patterns, which are illustrated in Figs. 3A to 3F, based on the acquired information on the leading vehicle (S14). For example, when vehicles are present in the opposite lane and the own lane, a light distribution pattern for low beam, which is illustrated in Fig. 3A, is selected. For example, when no vehicle is present in front of the own vehicle, a light distribution pattern for high beam, which is illustrated in Fig. 3B, is selected. For example, when no preceding vehicle is present on the own lane side and an oncoming vehicle is present on the opposite lane side, a light distribution pattern for left-sided high beam, which is illustrated in Fig. 3C, is selected. The vehicle controller 302 outputs the information on the selected light distribution pattern to the emission controller 228 in the automotive headlamp 210.

The emission controller 228 determines whether the emission range of the light distribution pattern selected by the vehicle controller 302 is wider than that of the light distribution pattern, which is currently being emitted (S16). For example, when the light distribution, which is currently being emitted, is a light distribution pattern for low beam and the selected light distribution pattern is that for high beam, the emission controller 228 determines that the emission range is wider.

When the emission range of the selected light distribution pattern is wider than that of the present light distribution pattern (S16/Y), the emission controller 228 determines whether the light distribution pattern, which has been selected this time, is selected a predetermined specified number of times (N times) in a row (S18). The emission controller 228 is provided with a counter for counting the number of times in which the same light distribution pattern is continued. This counter is reset when the same light distribution pattern is discontinued. The specified number of times is set to a value greater than or equal to 2.

When the same light distribution pattern is selected N times in a row (S18/Y), the emission controller 228 controls the leveling actuator 226, the swivel actuator 222, and the shade motor 221, etc., so that the present light distribution pattern is switched to the selected light distribution pattern (S20). When the number of times in which the same light distribution pattern is continued is still below N times (S18/N), the control flow returns to S10 such that imaging with the camera 306 is performed after elapse of the imaging cycle Tp. When the number of times in which the same light distribution pattern is continued reaches N times by repeating S10 to S16, the control flow is transferred to S20 such that the light distribution pattern is switched.

On the other hand, when the emission range of the light distribution pattern, which has been selected in S16, is narrower than or the same as that of the present light distribution pattern (S16/N), the emission controller 228 controls the leveling actuator 226, the swivel actuator 222, and the shade motor 221 such that the selected light distribution pattern is immediately emitted (S22). When the selected light distribution pattern is the same as the present light distribution pattern, the present control is maintained.

Subsequently, control of the aforementioned light distribution control systems 100 will be described in detail by using timing charts.

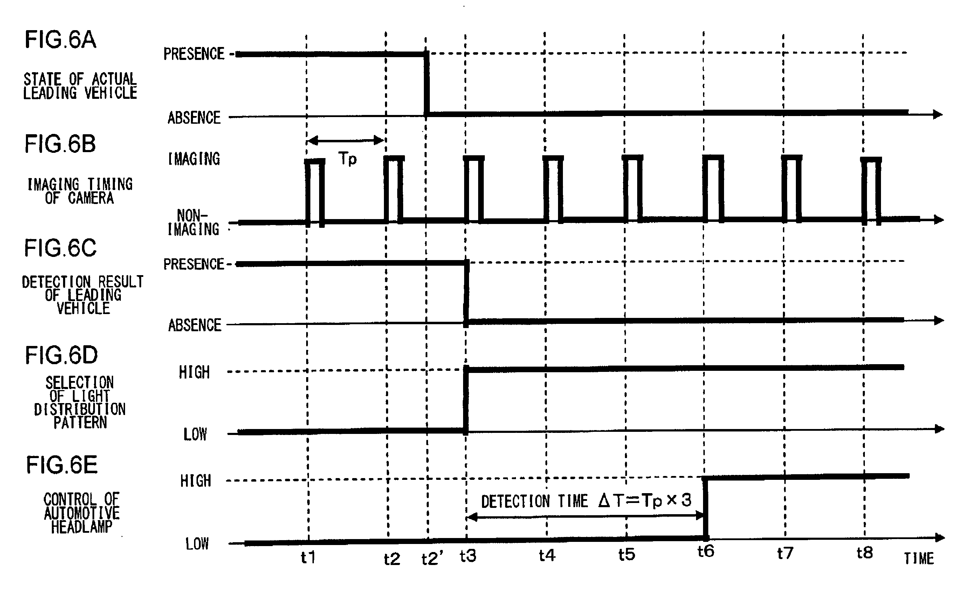

Figs. 6A to 6E are timing charts for explaining the control performed when switching to a light distribution pattern with a wider emission range. Fig. 6A illustrates an actual state of a leading vehicle, Fig. 6B illustrates the imaging timing of the camera 306, Fig. 6C illustrates a detection result of the leading vehicle by the vehicle controller 302, Fig. 6D illustrates selection of a light distribution pattern by the vehicle controller 302, and Fig. 6E illustrates control of the automotive headlamp 210 by the emission controller 228. Herein, description will be made, assuming a situation in which a light distribution pattern for low beam is at first emitted because a leading vehicle is present, and then a light distribution pattern for high beam will be switched to because no leading vehicle is present on the way. Further, the description will be made, assuming that the specified number of times N is 4.

As illustrated in Fig. 6B, the camera 306 images the front of a vehicle at every predetermined imaging cycle Tp second. When the camera 306 images the front of a vehicle at each of the time t1 to t8, the vehicle controller 302 detects a leading vehicle at each imaging time based on the image data from the camera 306, thereby selecting the optimal light distribution pattern.

As illustrated in Fig. 6A, a leading vehicle is present in front of the own vehicle at the time t1 and t2.
Accordingly, the vehicle controller 302 detects that a leading vehicle is present at the time t1 and t2, therefore selecting a light distribution pattern for low beam. At the time t1 and t2, because the same light distribution pattern as the light distribution pattern that is being emitted at the time is selected, a light distribution pattern for low beam is maintained as it is.

Herein, it is assumed that no leading vehicle is present at the time t2' between the time t2 and t3, as illustrated in Fig. 6A. The vehicle controller 302 detects that no leading vehicle is present at the time t3, based on the imaged data that has been imaged at the time t3, immediately after the time t2' , as illustrated in Fig. 6C. Because no leading vehicle is present, the vehicle controller 302 selects a light distribution pattern for high beam at the time t3, as illustrated in Fig. 6D. The information on the selected light distribution pattern is transmitted to the emission controller 228.

When receiving the information on the selected light distribution pattern from the vehicle controller 302, the emission controller 228 determines whether the emission range of the selected light distribution pattern is wider than that of the light distribution pattern, which is currently being emitted. Because the actual emission pattern at the time t3 is a light distribution pattern for low beam and because the vehicle controller 302 selects a light distribution pattern for high beam, it is switching to a light distribution pattern with a wider emission range. However, because a light distribution pattern for high beam has been selected only once at the time t3, switching of a light distribution pattern is not immediately performed in accordance with S18 in the flow chart illustrated in Fig. 5, and detection of a leading vehicle and selection of a light distribution pattern are performed again at the time t4 based on the image data, which has been newly imaged. Herein, no leading vehicle is detected even at the time t4 and a light distribution pattern for high beam is selected. However, because a light distribution pattern for high beam has been selected only two times in a row at the time t4, the emission controller 228 does not yet perform switching of a light distribution pattern. The same is true at the time t5 when a light distribution pattern for high beam has been selected three times in a row. In the present embodiment, because the specified number of times N is set to 4, switching from a light distribution pattern for low beam to that for high beam is performed at the time t6 when a light distribution pattern for high beam has been selected four times in a row. That is, when no leading vehicle is detected by the vehicle controller 302 four times in a row, the emission controller 228 determines that no leading vehicle is present, thereby performing switching of a light distribution pattern.

Accordingly, in the present embodiment, (Tp x 3) seconds are needed since the time t3 when it is detected for the first time by the vehicle controller 302 that no leading vehicle is present until a light distribution pattern is switched to by the emission controller 228 after it is determined that no leading vehicle is present. When a light distribution pattern for low beam is selected after detecting, even once during (Tp x 3) seconds, that a leading vehicle is present, the counter for counting the number of times in which the same light distribution pattern is continued is reset, and hence switching of a light distribution pattern is not performed at the time t6. According to the invention, the time elapsed since there occurs a change in a detection result of a leading vehicle by the vehicle controller 302 until switching of a light distribution pattern is started after determining the change, is referred to as the "detection time ΔT". The detection time ΔT can be represented by ΔT = Tp × (N-1).

As stated above, in the light distribution control system 100 according to the present embodiment, when switching to a light distribution pattern with a wider emission range is performed, switching to a new light distribution pattern is not immediately performed by the emission controller 228 even when there occurs a change in a detection result of a leading vehicle, and it is designed that switching to a new light distribution pattern is performed after elapse of the detection time ΔT. For example, when switching to a light distribution pattern with a wider emission range, such as the case where a light distribution pattern for low beam is switched to that for high beam, there is the fear that glare may be provided to a leading vehicle if the detection of a leading vehicle by the vehicle controller 302 is failed. Accordingly, in the present embodiment, it is designed that the detection of a leading vehicle is repeatedly performed during the detection time ΔT, in preference of the detection accuracy of a leading vehicle to the switching speed of a light distribution pattern. Because the detection accuracy can be enhanced by detecting a leading vehicle for long time in comparison with the case where presence/absence of a leading vehicle is determined by only one time of detection, it can be suppressed that glare may be provided to a leading vehicle.

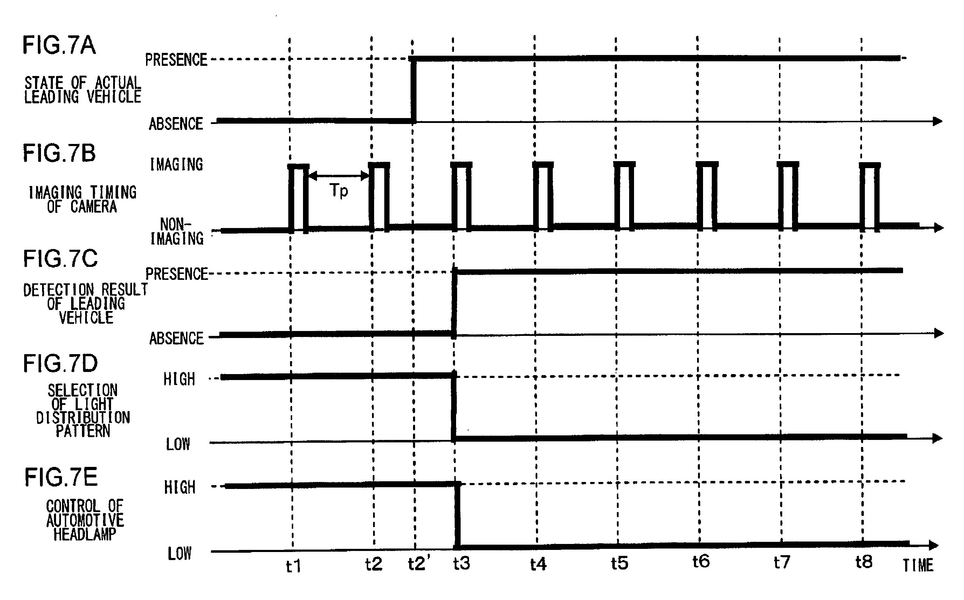

Figs. 7A to 7E are timing charts for explaining the control performed when switching to a light distribution pattern with a narrower emission range. Fig. 7A illustrates an actual state of a leading vehicle, Fig. 7B illustrates the imaging timing of the camera 306, Fig. 7C illustrates a detection result of the leading vehicle by the vehicle controller 302, Fig. 7D illustrates selection of a light distribution pattern by the vehicle controller 302, and Fig. 7E illustrates control of the automotive headlamp 210 by the emission controller 228. Herein, description will be made, assuming a situation in which a light distribution pattern for high beam is at first emitted because no leading vehicle is present, and then a light distribution pattern for low beam will be switched to because a leading vehicle is present on the way.

As illustrated in Fig. 7A, no leading vehicle is present in front of the own vehicle at the time t1 and t2.
Accordingly, the vehicle controller 302 detects that no leading vehicle is present at the time t1 and t2, therefore selecting a light distribution pattern for high beam. At the time t1 and t2, because the same light distribution pattern as the light distribution pattern that is being emitted at the times is selected, a light distribution pattern for high beam is maintained as it is.

Herein, it is assumed that a leading vehicle is present at the time t2' between the time t2 and t3, as illustrated in Fig. 7A. The vehicle controller 302 detects that a leading vehicle is present at the time t3, based on the imaged data that has been imaged at the time t3, immediately after the time t2' , as illustrated in Fig. 7C. Because a leading vehicle is present, the vehicle controller 302 selects a light distribution pattern for low beam at the time t3, as illustrated in Fig. 7D. The information on the selected light distribution pattern is transmitted to the emission controller 228.

When receiving the information on the selected light distribution pattern from the vehicle controller 302, the emission controller 228 determines whether the emission range of the selected light distribution pattern is wider than that of the light distribution pattern, which is currently being emitted. Because the actual emission pattern at the time t3 is a light distribution pattern for high beam and because the vehicle controller 302 selects a light distribution pattern for low beam, it is switching to a light distribution pattern with a narrower emission range. Accordingly, switching of a light distribution pattern is immediately performed at the time t3, as illustrated in the flow chart in Fig. 5.

As stated above, in the light distribution control system 100 according to the present embodiment, when switching to a light distribution pattern with a narrower emission range is performed, it is designed that switching to a new light distribution pattern is performed immediately after it is detected that there occurs a change in a detection result of a leading vehicle by the emission controller 228. That is, the switching of a light distribution pattern is performed on condition that the detection time ΔT is 0 second. For example, when switching to a light distribution pattern with a narrower emission range, such as the case where a light distribution pattern for high beam is switched to that for low beam, there is no possibility that glare may be provided to a leading vehicle even if a detection result of a leading vehicle by the vehicle controller 302 is failed. Accordingly, in the present embodiment, switching of a light distribution pattern is performed on condition that the detection time ΔT is 0 second, in preference of rapid switching to the optimal light distribution pattern to the detection accuracy of a leading vehicle. By rapidly performing the switching to the optimal light distribution pattern as stated above, it can be suppressed that glare may be provided to a leading vehicle.

Herein, it is designed that the detection time ΔT is 0 second when switching to a light distribution pattern with a narrower emission range is performed; however, the detection time Δ T shall not be limited to 0 second. For example, the detection time ΔT may be set to Tp such that switching of a light distribution pattern is rapidly performed while enhancing the detection accuracy of a leading vehicle.

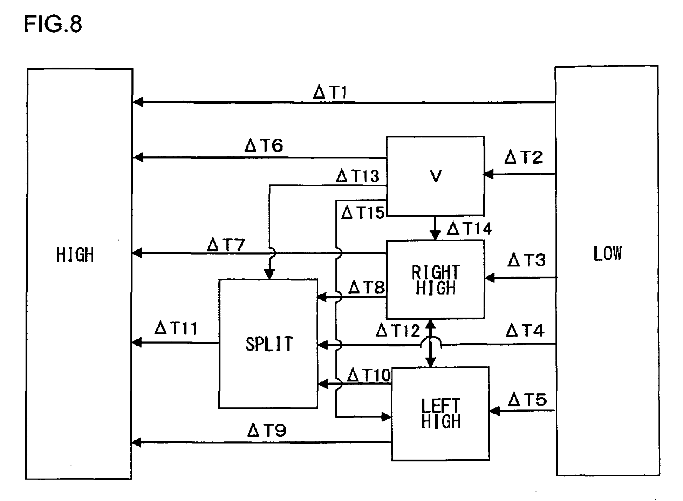

Fig. 8 is a view illustrating detection time between each light distribution pattern when an emission range is widened. In Fig. 8, the detection time when a light distribution pattern for low beam is switched to that for high beam, to a V light distribution pattern, to that for right-sided high beam, to a split light distribution pattern, and to that for left-sided high beam, are represented by ΔT1, ΔT2, ΔT3, ΔT4, and ΔT5, respectively. Further, the detection time when a V light distribution pattern is switched to a light distribution pattern for high beam, to a split light distribution pattern, to a light distribution pattern for right-sided high beam, and to that for left-sided high beam, are represented by ΔT6, ΔT13, ΔT14, ΔT15, respectively. Further, the detection time when a light distribution pattern for right-sided high beam is switched to that for high beam, and to a split light distribution pattern, are represented by ΔT7 and Δ T8, respectively. Further, the detection time when a light distribution pattern for left-sided high beam is switched to that for high beam, and to a split light distribution pattern, are represented by ΔT9 and ΔT10, respectively. Further, the detection time when a split light distribution pattern is switched to a light distribution pattern for high beam is represented by ΔT11. Further, the detection when switching between a light distribution pattern for left-sided high beam and that for right-sided high beam is performed is represented by ΔT12. It is noted that, in the switching between a light distribution pattern for left-sided high beam and that for right-sided high beam, both areas of the emission ranges are almost the same as each other.

Herein, the detection time ΔT1 to ΔT11 and ΔT13 to Δ T15 are set to, for example, approximately 1 to 2 seconds. The detection time ΔT1 to ΔT11 and ΔT13 to ΔT15 may be the same or different. The optimal detection time may be appropriately determined by experiment or simulation. The detection time ΔT12 when the switching between a light distribution pattern for right-sided high beam and that for left-sided high beam is performed, is set to the time smaller than or equal to the detection time ΔT1 to ΔT11 and ΔT13 to ΔT15, for example, to 0 to 0. 5 seconds, in order to prevent glare.

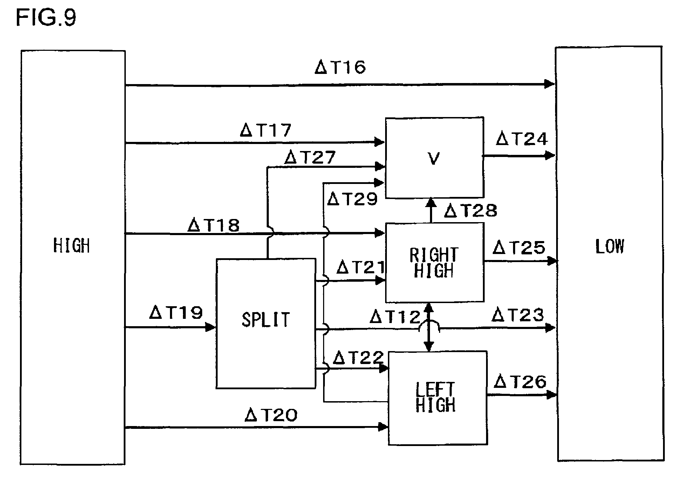

Fig. 9 is a view illustrating the detection time between each light distribution pattern when an emission range is narrowed. In Fig. 9, the detection time when a light distribution pattern for high beam is switched to that for low beam, to a V light distribution pattern, to that for right-sided high beam, to a split light distribution pattern, and to that for left-sided high beam, are represented by ΔT16, ΔT17, ΔT18, ΔT19, and ΔT20, respectively. Further, the detection time when a split light distribution pattern is switched to that for right-sided high beam, to that for left-sided high beam, to that for low beam, and to a V light distribution pattern, are represented by ΔT21, Δ T22, ΔT23, and ΔT27, respectively. Further, the detection time when a V light distribution pattern is switched to a light distribution pattern for low beam is represented by Δ T24. Further, the detection time when a light distribution pattern for right-sided high beam is switched to that for low beam, and to a V light distribution pattern, are represented by ΔT25 and Δ T28, respectively. Further, the detection time when a light distribution pattern for left-sided high beam is switched to that for low beam, and to a V light distribution pattern, are represented by ΔT26 and ΔT29, respectively.

Herein, the detection time ΔT16 to ΔT29 are set to a time smaller than the detection time ΔT1 to ΔT11 and ΔT13 to Δ T15, which are illustrated in Fig. 8. For example, the detection time ΔT16 to ΔT29 are set to 0 to approximately 0.5 seconds. The detection time ΔT16 to ΔT29 may be the same or different.

As stated above, in the light distribution control system 100 according to the present embodiment, when switching to a light distribution pattern with a wider emission range, the detection time ΔT of a leading vehicle is set to be larger than that set when switching to a light distribution pattern with a narrower emission range. Thereby, the detection accuracy of a leading vehicle can be enhanced when switching to a light distribution pattern with a wider emission range, and hence it can be suppressed that glare may be provided to a leading vehicle. In contrast, when switching to a light distribution pattern with a narrower emission range, the optimal light distribution pattern can be rapidly switched to by setting the detection time ΔT of a leading vehicle to be small.

In the light distribution control system 100 according to the present embodiment, the detection accuracy of a leading vehicle can be enhanced without an expensive, ultra-sensitive camera, and hence a light distribution control system can be attained with an inexpensive structure, in which it can be prevented that glare may be provided to a leading vehicle.

The detection accuracy of a leading vehicle varies in accordance with various driving states of a vehicle. Accordingly, the vehicle controller 302 and the emission controller 228 may change the detection time ΔT in accordance with a driving state of a vehicle.

For example, there is the fear that it may be difficult to defect a leading vehicle when it is raining in comparison with when there is a clear sky. Accordingly, a rain sensor 311 for detecting rain may be connected with the vehicle controller 302 such that, when it is raining, the detection time ΔT is set to be larger than that set when there is any weather other than rain. For example, when switching a light distribution pattern for low beam to that for high beam and when the detection time is set to 1 second when there is any weather other than rain, the detection time is changed to 3 seconds when it is raining. Thereby, the detection accuracy of a leading vehicle can be enhanced when it is raining.

In addition, because the position of a leading vehicle varies every second when driving on a curved road, there is the possibility that light distribution patterns may be frequently switched. Because a driver feels a sense of discomfort when light distribution patterns are frequently switched, it is not desirable.

Accordingly, the vehicle controller 302 and the emission controller 228 may determine whether a vehicle is driving on a curved road based on the information from the steering sensor 308, the vehicle speed sensor 310, and the navigation system 312, etc., so that, when driving on a curved road, the detection time Δ T is set to be larger than that set when driving on any road other than a curved road. For example, when switching a light distribution pattern for low beam to that for high beam and when the detection time ΔT on a straight road is set to 1 second, the detection time ΔT on a curved rod is changed to 5 seconds. Thereby, it can be prevented that light distribution patterns are frequently switched on a curved road, thereby suppressing a driver from feeling a sense of discomfort.

As stated above, in the light distribution control system 100 according to the present embodiment, when switching to a light distribution pattern with a wider emission range than before, the detection time ΔT of a leading vehicle is set to be larger than that set when switching to a light distribution pattern with a narrower emission range. However, although the fear that glare may be provided to a leading vehicle can be reduced because of the enhanced detection accuracy of a leading vehicle with such a structure, it takes a long time until, for example, a light distribution pattern for high beam is switched to after no leading vehicle was present in front of a vehicle.

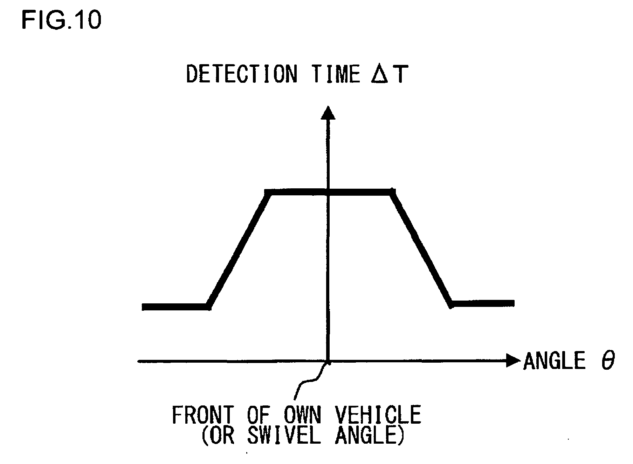

Accordingly, the vehicle controller 302 and the emission controller 228 may change the detection time ΔT in accordance with the horizontal position of a leading vehicle. Fig. 10 is a view for explaining variable control of the detection time Δ T in accordance with the horizontal position of a leading vehicle. Fig. 10 illustrates the control when driving on a straight road. In Fig. 10, the vertical axis represents the detection time ΔT and the horizontal axis represents the horizontal position of a leading vehicle when perspectively viewing the front of the own vehicle from the own vehicle (angle θ formed between the straight line, extending from the own vehicle toward the front of the own vehicle, and the straight line connecting the own vehicle with the leading vehicle). In Fig. 10, the cross point between the vertical axis and the horizontal axis represents the front of the own vehicle.

Herein, the detection time ΔT is set to be large when a leading vehicle is present in an area in front of the own vehicle, and is set to be smaller as the position of the leading vehicle deflects leftward or rightward from the front of the own vehicle, as illustrated in Fig. 10. When a leading vehicle is present in front of the own vehicle, significant glare may be provided to the leading vehicle if detection of the leading vehicle fails and, for example, a light distribution pattern for high beam is emitted. Accordingly, the detection time ΔT is set to be large in order to more carefully perform detection of a leading vehicle, which is present in front of the own vehicle. On the other hand, when a leading vehicle is present in an area outside the front of the own vehicle, significant glare may not be provided to the leading vehicle even if detection of the leading vehicle fails. Accordingly, the detection time ΔT is set to be smaller as the position of the leading vehicle deflects leftward or rightward from the front of the own vehicle, in preference of enhanced visibility due to rapid switching of a light distribution pattern to the detection accuracy.

As stated above, Fig. 10 illustrates the control when driving on a straight road. When a vehicle is provided with a swivel function, the detection time ΔT may be set to be large when a leading vehicle is present around the swivel angle and may be set to be smaller as the position of the leading vehicle deflects from the swivel angle.

Further, the vehicle controller 302 and the emission controller 228 may detect the distance to a leading vehicle based on the information from the camera 306 or an inter-vehicular distance sensor such that, when the distance to the leading vehicle is larger than a predetermined threshold distance, the detection time ΔT of the leading vehicle is set to be larger than that set when the distance to the leading vehicle is smaller than or equal to the predetermined threshold distance. The detection accuracy of a leading vehicle varies in accordance with the distance between the own vehicle and a leading vehicle. That is, the detection accuracy is deteriorated as a leading vehicle is remote from the own vehicle. Accordingly, switching of a light distribution pattern can be rapidly performed for a change in presence/absence of a leading vehicle near the own vehicle while enhancing the detection accuracy of a leading vehicle, which is remote from the own vehicle, by setting, when a leading vehicle is more remote than a predetermined threshold distance, the detection time ΔT to be larger than that set when a leading vehicle is closer than the predetermined threshold distance.

In the light distribution control system 100 according to the present embodiment, manual switching of a light distribution pattern can be performed by a driver operating the light switch 304, other than the ADB mode in which the optimal light distribution pattern is formed in accordance with situations surrounding a vehicle. In the present embodiment, when a driver intends to switch to a light distribution pattern that is different from before by manually operating the light switch 304 while control of a light distribution pattern is being performed in the ADB mode, the vehicle controller 302 and the emission controller 228 control the leveling actuator 226, the swivel actuator 222, and the shade motor 221 such that the light distribution pattern is gradually switched to. With this, rapid switching of a light distribution pattern is avoided, and hence it can be suppressed that a driver may feel a sense of discomfort, which accompanies a change in light distribution pattern.

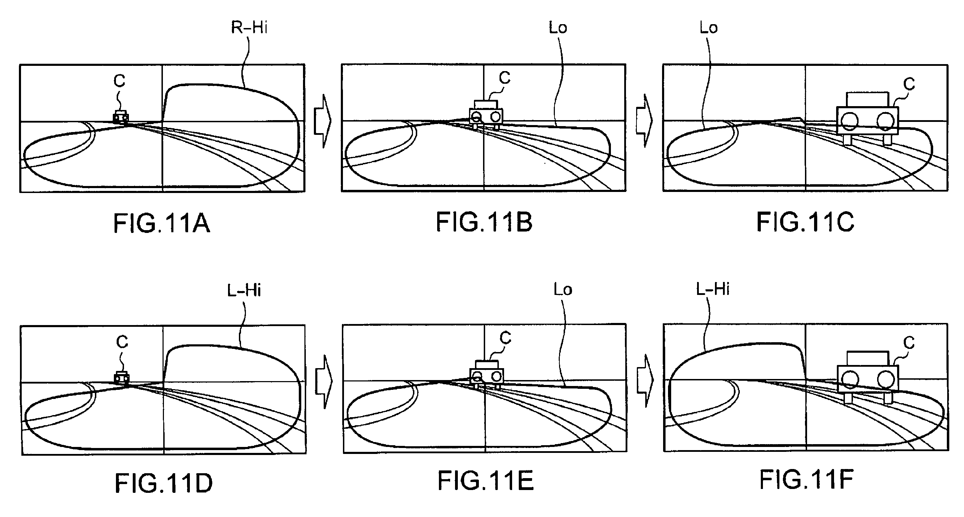

Figs. 11A to 11F are views for explaining control of a light distribution pattern for enhancing visibility on a curved road. Figs. 11A to 11C are views illustrating a change in light distribution pattern when the control is performed in accordance with the control flow illustrated in Fig. 5. Herein, description will be made, assuming that an oncoming vehicle C is approaching from a remote position while driving on a curved road that curves left.

As illustrated in Fig. 11A, when an oncoming vehicle C is present at a remote position, the oncoming vehicle C is located on the left side of the front of the own vehicle, when viewed from the own vehicle. Accordingly, the vehicle controller 302 and the emission controller 228 select and emit a light distribution pattern for right--sided high beam R-Hi. Subsequently, when the oncoming vehicle C approaches the vicinity of the front of the own vehicle, as illustrated in Fig. 11B, the vehicle controller 302 and the emission controller 228 select and emit a light distribution pattern for low beam Lo. Subsequently, when the oncoming vehicle C almost passes the own vehicle after further approaching the own vehicle, the oncoming vehicle C is present on the right side of the front of the own vehicle, when viewed from the own vehicle, as illustrated in Fig. 11C. In this case, because no vehicle is present on the left side, when viewed from the front of the own vehicle, it is desirable that a light distribution pattern for high beam is emitted. However, switching of a light distribution pattern for low beam to that for high beam is the switching to a light distribution pattern with a wider emission range, and hence the detection time ΔT is set to be large and the switching is delayed. As a result, there is the fear that the visibility of remote areas on a curved road may be impaired.

Figs. 11D to 11F are views illustrating the improved switching control of a light distribution pattern on a curved road. The control illustrated in Figs. 11D and 11E are the same as that illustrated in Figs. 11A and 11B. Herein, in the present control, when one of a light distribution pattern for right-sided high beam and that for left-sided high beam has been switched to that for low beam on a curved road, the detection time ΔT is set to be smaller than usual when switching a light distribution pattern for low beam to the other of the aforementioned two light distribution patterns. With such control, switching of a light distribution pattern for low beam to that for left-sided high beam L-Hi can be rapidly performed when the oncoming vehicle C is present on the right side of the front of the own vehicle, as illustrated in Fig. 11F, and hence the visibility of remote areas on a curved road can be improved.

The present invention has been described above based on embodiments. These embodiments are intended solely for the purpose of illustration, and it should be understood by those skilled in the art that various modifications are possible in combining those various components and various processing and those modifications also fall in the scope of the claims.

## Claims

1. A light distribution control system (100) for an automotive headlamp comprising:
an automotive headlamp (210) configured to be capable of forming a plurality of light distribution patterns; and
a control means (302) configured to detect a leading vehicle that is present in front of an own vehicle and select one light distribution pattern from the plurality of light distribution patterns based on a result of the detection and control the automotive headlamp (210) to emit the selected light distribution pattern,
wherein, when switching to a light distribution pattern with a wider emission range in the front view from the driver than before, the control means (302) sets a "detection time" of a leading vehicle to be larger than that set whenever switching to a light distribution pattern with a narrower emission range in the front view from the driver, where the "detection time" is defined as the time elapsing between the occurence of a change in a detection result of a leading vehicle and the start of the switching of a light distribution pattern, and **characterised in that**
the control means (302) changes the "detection time" of a leading vehicle in accordance with the horizontal position of the leading vehicle.

2. A light distribution control system according to claim 1 further comprising a driving state detection means, wherein the control means (302) changes the detection time of a leading vehicle in accordance with the [a] detection result of the driving state detection means.

3. A light distribution control system according to claim 2, wherein the driving state detection means includes a weather detection means (311) configured to detect a weather state, and wherein, when it is raining, the control means (302) sets the detection time of a leading vehicle to be larger than that set when there is any weather other than rain.

4. A light distribution control system according to claim 2 or claim 3, wherein the driving state detection means includes a curved road detection means (308,310,312) configured to detect whether a vehicle is driving on a curved road, and wherein, when a vehicle is driving on a curved road, the control means (302) sets the detection time of a leading vehicle to be larger than that set when the vehicle is driving on any road other than a curved road.

5. A light distribution control system according to any one of claims 1 to 4, wherein the control means (302) includes a distance detection means configured to detect the distance to a leading vehicle such that, when the distance to a leading vehicle is larger than a predetermined threshold distance, the detection time of the leading vehicle is set to be larger than that set when the distance to the leading vehicle is smaller than or equal to the predetermined threshold distance.

6. A light distribution control system according to any preceding claim further comprising a light distribution manual switching means (304), wherein, when receiving a command indicating that a light distribution pattern that is different from before is switched to, from the light distribution manual switching means (304), the control means (302) controls the automotive headlamp (210) such that the light distribution pattern is gradually switched to.

7. A light distribution control system according to any preceding claim, wherein the light distribution control system (100) is configured to be capable of switching a light distribution pattern among three or more types of light distribution patterns, and wherein the control means (302) sets at least one of the detection time of a leading vehicle in switching a light distribution pattern among these light distribution patterns, to be different from others.

## Patentansprüche

1. Lichtverteilungs-Steuersystem (100) für einen Fahrzeugscheinwerfer, mit:
einem Fahrzeugscheinwerfer (210), der so konfiguriert ist, dass er eine Mehrzahl von Lichtverteilungsmustern bilden kann; und
einer Steuereinrichtung (302), die zum Ermitteln eines vorausfahrenden Fahrzeugs konfiguriert ist, welches sich vor dem eigenen Fahrzeug befindet, und zum Auswählen eines Lichtverteilungsmusters aus der Mehrzahl von Lichtverteilungsmustern basierend auf dem Ergebnis der Ermittlung, und zum Steuern des Fahrzeugscheinwerfers (210), das ausgewählte Lichtverteilungsmuster zu emittieren,
wobei, wenn auf ein Lichtverteilungsmuster mit einem weiteren Emissionsbereich in der Frontsicht des Fahrers als vorher umgeschaltet wird, die Steuereinrichtung (302) die "Ermittlungszeit" eines vorausfahrenden Fahrzeugs größer einstellt, als sie eingestellt wird, wenn auf ein Lichtverteilungsmuster mit einem engeren Emissionsbereich in der Frontsicht des Fahrers umgeschaltet wird, wobei die "Ermittlungszeit" als Zeit definiert ist, die zwischen dem Auftreten einer Veränderung des Ennittlungsergebnisses eines vorausfahrenden Fahrzeugs und dem Beginn des Umschaltens eines Lichtverteilungsmusters verstreicht, und
**dadurch gekennzeichnet, dass**
die Steuereinrichtung (302) die "Ermittlungszeit" eines vorausfahrenden Fahrzeugs gemäß der horizontalen Position des vorausfahrenden Fahrzeugs ändert.

2. Lichtverteilungs-Steuersystem nach Anspruch 1, das des Weiteren eine Fahrzustands-Ermittlungseinrichtung aufweist, wobei die Steuereinrichtung (302) die Ermittlungszeit eines vorausfahrenden Fahrzeugs gemäß dem [einem] Ermittlungsergebnis der Fahrzustands-Ermittlungseinrichtung ändert.

3. Lichtverteilungs-Steuersystem nach Anspruch 2, wobei die Fahrzustands-Ermittlungseinrichtung eine Wetterermittlungseinrichtung (311) enthält, die zum Ermitteln eines Wetterzustands konfiguriert ist, und wobei, wenn es regnet, die Steuereinrichtung (302) die Ermittlungszeit des vorausfahrenden Fahrzeugs größer einstellt, als sie bei anderem Wetter als Regen eingestellt ist.

4. Lichtverteilungs-Steuersystem nach Anspruch 2 oder Anspruch 3, wobei die Fahrzustands-Ermittlungseinrichtung eine Ermittlungseinrichtung für kurvige Straßen (308, 310, 312) aufweist, die konfiguriert ist, um zu ermitteln, ob ein Fahrzeug auf einer kurvigen Straße fährt, und wobei, wenn ein Fahrzeug auf einer kurvigen Straße fährt, die Steuereinrichtung (302) die Ermittlungszeit eines vorausfahrenden Fahrzeugs größer einstellt, als sie eingestellt ist, wenn das Fahrzeug auf einer anderen Straße als auf einer kurvigen Straße fährt.

5. Lichtverteilungs-Steuersystem nach einem der Ansprüche 1 bis 4, wobei die Steuereinrichtung (302) eine Abstandsermittlungseinrichtung enthält, die konfiguriert ist, um den Abstand zu dem vorausfahrenden Fahrzeug zu ermitteln, so dass, wenn der Abstand zu einem vorausfahrenden Fahrzeug größer als ein vorgegebener Schwellenwert-Abstand ist, die Ermittlungszeit des vorausfahrenden Fahrzeugs größer eingestellt wird, als sie eingestellt ist, wenn der Abstand zu dem vorausfahrenden Fahrzeug kleiner oder gleich dem vorgegebenen Schwellenwert-Abstand ist.

6. Lichtverteilungs-Steuersystem nach einem der vorhergehenden Ansprüche, das des Weiteren eine manuelle Lichtverteilungs-Schalteinrichtung (304) aufweist, wobei, wenn von der manuellen Lichtverteilungs-Schalteinrichtung (304) ein Befehl empfangen wird, der angibt, dass auf ein Lichtverteilungsmuster umgeschaltet wird, das sich von dem vorherigen unterscheidet, die Steuereinrichtung (302) den Fahrzeugscheinwerfer (210) so steuert, dass allmählich auf das Lichtverteilungsmuster umgeschaltet wird.

7. Lichtverteilungs-Steuersystem nach einem der vorhergehenden Ansprüche, wobei das Lichtverteilungs-Steuersystem (100) so konfiguriert ist, dass es auf ein Lichtverteilungsmuster aus drei oder mehr Arten von Lichtverteilungsmustern umschalten kann, und wobei die Steuereinrichtung (302) wenigstens eine der Ermittlungszeiten eines vorausfahrenden Fahrzeugs durch Umschalten eines Lichtverteilungsmusters aus diesen Lichtverteilungsmustern so einstellt, dass sie sich von anderen unterscheidet.

## Revendications

1. Système de contrôle de la distribution de lumière (100) pour un phare automobile, comprenant :
un phare automobile (210) configuré de façon à pouvoir former une pluralité de schémas de distribution de lumière ; et
les moyens de contrôle (302) configuré de façon à détecter un véhicule précédent, roulant devant son propre véhicule et à sélectionner un schéma de distribution de lumière parmi la pluralité de schémas de distribution de lumière, sur la base du résultat de la détection et du contrôle du phare automobile (210) pour émettre le schéma de distribution de lumière choisi,
dans lequel, lors du passage à un schéma de distribution de lumière ayant une gamme d'émission supérieure dans la vue frontale par rapport au conducteur qu'avant, les moyens de contrôle (302) établissent un « temps de détection » d'un véhicule précédent, de sorte qu'il soit supérieur à celui établi lors du passage à un schéma de distribution de la lumière ayant une gamme d'émission plus étroite dans la vue avant par rapport au conducteur, où le « temps de détection » est défini comme le temps passé entre la survenue d'un changement dans le résultat de détection du véhicule précédent et le début du passage à un schéma de distribution de lumière et **caractérisé en ce que**
les moyens de contrôle (302) changent le « temps de détection » d'un véhicule précédent conformément à la position horizontale dudit véhicule précédent.

2. Système de contrôle de distribution de lumière selon la revendication 1, comprenant en outre un système de détection de l'état de conduite, dans lequel les moyens de contrôle (302) changent le temps de détection d'un véhicule précédent conformément au [a] résultat de détection des moyens de détection de l'état de conduite.

3. Système de contrôle de la distribution de lumière selon la revendication 2, dans lequel les moyens de détection de l'état de conduite comprennent un système de détection des conditions météorologiques (311) configuré pour détecter un état du climat, et dans lequel, quand il pleut, les moyens de contrôle (302) règlent le temps de détection d'un véhicule précédent, de sorte qu'il soit supérieur à celui établi lorsqu'il ne pleut pas.

4. Système de contrôle de la distribution de lumière selon la revendication 2 ou 3, dans lequel les moyens de détection de l'état de conduite comprennent un système de détection de route courbe (308, 310, 312), configuré de façon à détecter si un véhicule roule sur une route courbe, et dans lequel, quand un véhicule roule sur une route courbe, les moyens de contrôle (302) règlent le temps de détection d'un véhicule précédent de sorte qu'il soit supérieur à celui établi quand le véhicule roule sur n'importe quelle route différente d'une route en courbe.

5. Système de contrôle de la distribution de lumière selon l'une quelconque des revendications 1 à 4, dans lequel les moyens de contrôle (302) comprennent un système de détection de distance, configuré de façon à détecter la distance par rapport à un véhicule précédent de sorte que, lorsque la distance par rapport à un véhicule précédent est supérieure à une distance limite prédéterminée, le temps de détection du véhicule précédent est réglé de façon à être supérieur à celui établi quand la distance par rapport au véhicule précédent est inférieure ou égale à la distance limite prédéterminée.

6. Système de contrôle de la distribution de lumière selon l'une quelconque des revendications précédentes, comprenant en outre un système de commutation manuel de distribution de la lumière (304) dans lequel, lors de la réception d'une commande indiquant qu'un schéma de distribution de lumière différent du précédent est activé, à partir des moyens de commutation manuels de distribution de lumière (304), les moyens de contrôle (302) commandent le phare automobile (210), de sorte que le schéma de distribution de la lumière soit progressivement atteint.

7. Système de contrôle de la distribution de lumière selon l'une quelconque des revendications précédentes, dans lequel le système de contrôle de la distribution de lumière (100) est configuré de façon à pouvoir passer à un schéma de distribution de la lumière parmi trois types de schémas de distribution de la lumière ou plus, et dans lequel les moyens de contrôle (302) établissent qu'au moins un temps de détection d'un véhicule précédent, lors du passage à un schéma de distribution de la lumière parmi ces schémas de distribution de la lumière, est différent des autres.
